# EUROPEAN PATENT APPLICATION

(11) **EP 4 020 879 A1**
(43) Date of publication of application: **29.06.2022**
(21) Application number: 20383159.9
(22) Date of filing: 24.12.2020
(51) Int. Cl.: H04L 9/32, H04L 9/08

(54) **METHOD OF GENERATING A KEY FOR AUTHENTICATION**

(71) Applicant: Lleidanetworks Serveis Telemàtics, S.A., 25003 Lleida (ES)
(72) Inventor: SAPENA, FRANCISCO, 25003 LLEIDA (ES); GALLO DE LOS MOZOS, MANUEL MARIA, 25003 LLEIDA (ES)

(57) **Abstract**

A method of generating a key for authenticating a first entity (1) accessing a system (3), comprising: generating a first key at a second entity (8), wherein the first key is generated from: a first data derived from information about the first entity (1) accessing the system (3); and a second data derived from a previous action performed by the second entity (8); the method further comprising: sending the first key to the first entity (1).

## Description

### FIELD

The present disclosure relates to a method of generating a key for authenticating a first entity accessing a system. The present disclosure also relates to a method of authenticating the first entity, and a data processing system adapted to perform the method disclosed herein.

### BACKGROUND

Two-factor authentication is an electronic authentication method in which a first entity (e.g. a user) is granted access to a system (e.g. website or application) of a second entity once the user is authenticated via two separate authentication methods. For example, the first entity may be required to enter a password associated with a profile saved in the second entity, and further a key or one-time password (OTP) which is sent via electronic message to an address (e.g. email, phone number) of the first entity.

This method of authentication increases security of the interaction between the first and second entities, because even if, for example, the password of the profile becomes known to a third party, the third party would also need access to an address of the first entity to gain access.

However, keys may themselves be vulnerable to discovery by a third party. For example, if the method for generating the key is derivable from the keys themselves then a third party may be able to predict future keys. For example, if the key is generated from information of the first entity (such as an ID of the first entity and an address of the entity), then an attacker may be able to predict a future key by observing previous keys generated from known entity IDs and addresses.

Accordingly, there is a desire to provide keys which are less vulnerable to attack (i.e. which cannot be predicted, calculated, reverse-engineered or discovered by a third party).

### DESCRIPTION

According to a first aspect of the invention, there is provided a method of generating a key for authenticating a first entity accessing a system, comprising: generating a first key at a second entity, wherein the first key is generated from:
- a first data derived from information about the first entity accessing the system; and
- a second data derived from a previous action;
the method further comprising sending the first key to the first entity. The previous action may be any action performed by the first entity, second entity or a third party which has been performed independently of the first entity's access to the system. Advantageously, as the key is generated in part from second data which is independent of the information about the first entity accessing the system, the key cannot be reconstructed from the knowledge about the first entity accessing the system alone.

The second entity may be configured to receive a value derived from a second key inputted to the system by the first entity; and to perform a comparison between the value and the first key.

The method may further comprise imputing the first key into a hash function.

The method may further comprise saving a representation of the first key in a memory of the second entity. In embodiments where the saved representation is the hash value of the first key, the second entity does not know the key as only the hash value is saved, meaning only the recipient of the electronic message (i.e. the first entity) knows the key before the first entity uses it.

The second data may be derived from non-repeatable information about the previous action performed by the second entity. As used herein, "non-repeatable" information may be information about the previous action that cannot be repeated, reversed, deducted or mimicked. For example, non-repeatable information may include any information about a previous action performed by an entity (e.g. the second entity) which is not accessible to a third party or which is not repeatable over multiple actions. For example, if the previous action relates to the generation of a previous key, then the address or ID of the first entity would be repeatable, whereas the time of a step performed by the second entity in generating the key (e.g. the time of transmission of the key in UTC) is non-repeatable.

The second data may be a hash value of information about the previous action. Likewise, the first data may be a hash value of information about the first entity accessing the system.

The first key may be sent to the first entity by an electronic message. The electronic message may be certified. The second entity may be configured to generate evidence of delivery of the electronic message (for example upon request).

The second data may be derived from a certification entry stored by the second entity.

The previous action may be within a predetermined time or a number of actions before the first key is generated.

The system may be of a third entity, and a request to send a first key to the first entity may be received by the second entity from the third entity.

The second entity may be further configured to indicate the validity of the second key to the third entity based on a comparison to determine whether the second key entered by the first entity corresponds to the first key.

Also provided is a method of authenticating a first entity accessing a system, comprising: generating a first key according to the first aspect; receiving a second key inputted to a system by the first entity; and performing a comparison between the value and the first key. The system may be of a third entity, and the method may further comprise indicating to the third entity, based on the comparison, whether the second key inputted by the first entity corresponds to the first key.

The value may be the second key inputted to the system by the first entity or may be a hash value of the second key inputted by the first entity. When the hash value of the second key is saved in the memory of the second entity, the hash value of the second key inputted by the first entity may be compared to the hash value of the first key saved in the memory.

According to a second aspect of the invention, there is provided a data processing system adapted to perform the steps of the method of the first aspect.

### BRIEF DESCRIPTION OF THE DRAWINGS

To enable better understanding of the present disclosure, and to show how the same may be carried into effect, reference will now be made, by way of example only, to the accompanying schematic drawings, in which:
FIG. 1 shows a flow diagram of a method of generating a key according to one or more embodiments of the invention;
FIG. 2 shows a flow diagram of a method of authenticating a first entity accessing a system;
FIG. 3 shows a flow diagram of a method of generating a key according to one or more further embodiments of the invention;
FIG. 4 shows a flow diagram of a method of authenticating a first entity accessing a system according to one or more embodiments; and
FIGS. 5 and 6 show flow diagrams of a method of certifying an electronic message according to one or more embodiments of the invention.

### DETAILED DESCRIPTION

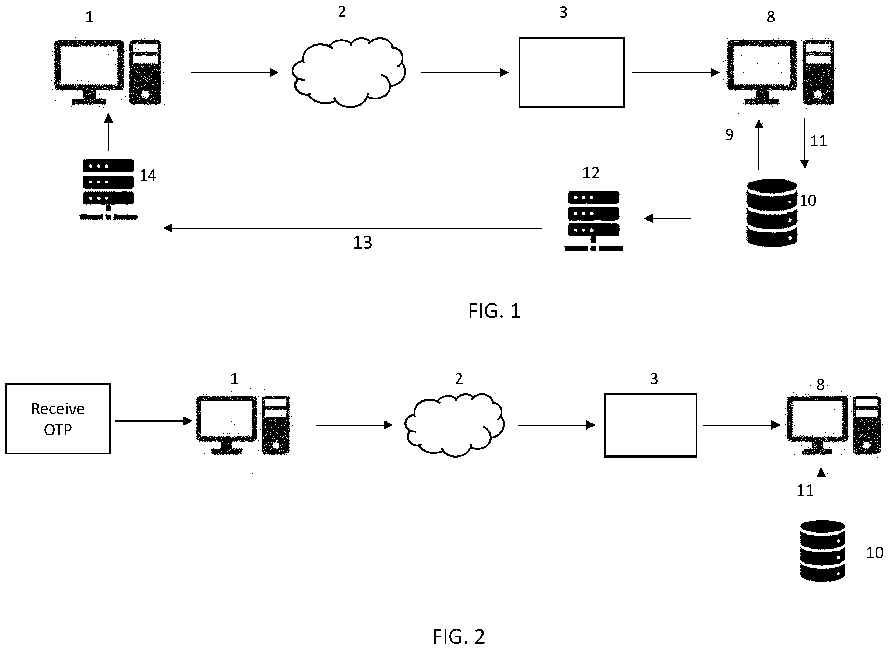

Fig. 1 shows a flow diagram of a method of generating a key for authenticating a first entity 1 accessing a system 3 according to one or more embodiments of the invention. In the method, a first entity 1 (e.g. a user) accesses a system 3. The system 3 may be of a second entity 8. The system 3 may be any platform of the second entity 8. For example, the system may be a web interface or an application, and specific examples include a login page, a transaction authorization process, a document transfer platform or an electronic signature/acceptance process. The first entity 1 may access the system 3 via the Internet or via any other suitable communication link. The first entity 1 may use any suitable device such as a personal computer, a tablet, or a smartphone. The second entity 8 may be any suitable data processing system for hosting the system 3, processing data and for sending and receiving communications (for example electronic communications).

In the method, the second entity 8 wishes to verify the identity of the first entity 1 in order for the user to perform an action on the system 3 (for example to login, make a transaction, send or receive a document or action a signature/acceptance process). Accordingly, once the first entity 1 accesses the system 3 a first key is generated by the second entity 8, wherein the first key is generated from a first data derived from information about the first entity 1 accessing the system 3, and a second data 9 which is derived from a previous action performed by the second entity 8. A representation 11 of the first key may be saved in a memory 10 of the second entity 8, although it is noted that the representation 11 need not be stored locally and may instead be stored by a memory of another entity. A representation of the first data may also be saved in the memory 10 to be used as the second data in a future key generation process, or the representation 11 of the key may be used as the second data in a future key generation process. In particular, the second entity 8 may comprise a memory or database 10 in which the second entity 8 saves data regarding previous actions the second entity 8 has performed. For example, the second data 9 could be any information relating to a prior authentication performed by the second entity 8. The first key may be generated using any technique. For example, the character string of the first and second data could be hashed, and the first key may be generated from the hash value (for example by taking some or all of the character strings of the hash value). Any suitable cryptographic hash function may be used, for example SHA-1, SHA-2 or SHA-3. The first key may be used as, for example, a One Time Password (OTP).

As the key is generated in a predetermined manner from the first data and the second data, the key is reproducible by the second entity 8 at a later date as evidence if required.

It is noted that for the first key generated by the second entity 8, there may not be a prior action from which second data can be taken. Accordingly, the second entity 8 may perform a dummy action or save or receive an initial dummy data in order to generate a key according to the methods disclosed herein.

The representation 11 of the first key may be the string value of the first key itself, or the generated first key may be input into a hash function and the hash value of the first key may be the representation 11. If the hash value of the first key is saved, either locally or remotely. advantageously this means that the second entity 8 does not have knowledge of the first key before it is keyed into the system 3 by the first entity 1 (i.e. only the first entity 1 has prior knowledge of the first key). Accordingly, the key is both uniquely linked to the first entity (as it is generated from the first data derived from information about the first entity) and under the exclusive control of the first entity (because no other party than the first entity has prior knowledge of the key).

Because the first key is generated partly based on second data 9 which is unrelated to any data relating to the first entity 1 accessing the system 3, and which is only available to the second entity 8, the first key cannot be reconstructed by a third party who only knows the first data.

Once the first key is generated, it is sent as a message 13 (for example an electronic message. text, email, instant message or other) to the first entity 1. For example, the first entity 1 may provide an address (email, telephone number or other address which can be used to send communication) and the second entity 8 may send the first key to the address. In the illustrated example, the first key is sent via email from an outgoing mail server 12 of the second entity 8 to an incoming mail server of the first entity 1.

The second data 9 may be any information which is generated from a prior action or event of the second entity 8. In some embodiments, the second data 9 is derived from non-repeatable information about the previous action. For example, the second data 9 may be derived from the time in UTC that a previous key was generated or sent by the second entity 8. Advantageously, the use of non-repeatable information about the prior action prevents a third party from fixing the second data using repeatable information.

To further prevent attempts to derive the method of generation of the first key (for example by a third party sending multiple requests and receiving multiple keys), the second data may be a hash value of information about the previous action. Alternatively, or additionally, the first data may be a hash value of information about the first entity accessing the system (for example, a hash value of an identification value of the first entity 1 and/or information about the action the first entity 1 wishes to perform on system 3).

Once the first key is sent to the first entity 1, the first entity 1 may submit a key to the second entity 8 (e.g. in a field in system 3 for entering the first key, or by an electronic message to second entity 8). The second entity 8 then initiates a process for verifying the key as shown in Fig. 2. Firstly, the second entity 8 receives the key submitted by the first entity 1. The second entity 8 then compares the inputted key to the representation of the first key (which was stored locally or remotely) to determine whether the key inputted by the first entity 1 was the first key. For example, in embodiments where the representation is the hash value of the first key, the hash value of the key inputted by the first entity 1 is compared to the hash value of the first key.

Once it is determined whether the key entered by the first entity 1 was the first key, the second entity 8 may allow the first entity 1 to perform an action (such as a transaction, digital signature or similar).

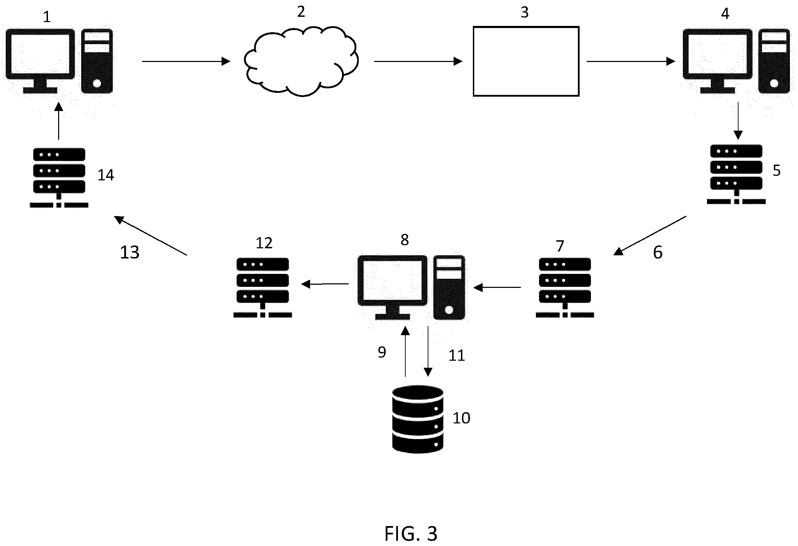

FIG. 3 shows a flow diagram of a method of generating a key for authenticating a first entity 1 according to one or more embodiments of the invention. Unlike the embodiment shown in Fig. 1, in the present embodiment the system 3 is of a third entity 4 and the third entity 4 requests that the second entity 8 provides a key to the first entity 1 on its behalf. In the method, a first entity 1 (e.g. a user) accesses a system 3 of a third entity 4. The system 3 may be any platform of the third entity 4 which the first entity 1 is accessing. For example, the system may be a web interface or an application, and specific examples include a login page, a transaction authorization process, a document transfer platform or an electronic signature/acceptance process. The first entity 1 may access the system via the Internet or via any other suitable communication link. The first entity may use any suitable device such as a personal computer, a tablet, or a smartphone. The third entity 4 may be any suitable data processing system for hosting the system 3, processing data and for sending and receiving electronic communications.

In the method, the third entity 4 must verify the identity of the first entity 1 in order for the user to perform an action on the system 3 (for example to login, make transaction, send or receive a document or action a signature/acceptance process). Accordingly, the third entity 8 sends a request 6 to a second entity 8 to generate a key to send to the first entity 1. The request may be in the form of an electronic request sent from an outgoing server 5 of the third entity 4 to an incoming server 7 of the second entity 8. The request may be in the form of an API call and contains an address of the first entity 1 for sending the key (e.g. by phone, email, instant messaging or the like). The second entity 8 and third entity 4 may communicate via encrypted messages, for example by public key cryptography. The request may additionally contain an identification of the first entity 1 (name, username, ID number or the like). The request may also contain a unique reference generated by the third entity 4, or the second entity 8 may instead generate a unique reference for the request and notify the third entity 4 of the reference.

Advantageously, the request 6 does not identify the system 3 for which it has been generated (the third entity 4 may have more than one system for which user verification is required). Accordingly, the second entity 8 does not know where the key is to be entered by the first entity 1, but rather only knows where the key is going to be sent to. Further, the second entity 8 may only be provided with the address of the first entity 1 to send the key to, and so the first entity 1 may be anonymized for the second entity 8.

The second entity 8 may be any suitable data processing system suitable for sending and receiving electronic communications, storing data and processing data according to the methods disclosed herein.

Once the second entity 8 has received the request 6, a key is generated from a first data derived from information about the first entity 1 accessing the system 3 contained in the request 6, and a second data 9 which is derived from a previous action performed by the second entity 8. A representation 11 of the key may be saved in a memory 10 of the second entity 8, along with the unique reference of the request, or they may be sent to the third entity 4 or elsewhere for storage. A representation of the first data may also be saved in the memory 10 (or in a remote memory) to be used as the second data in a future key generation process, or the representation 11 of the key may be used as the second data in a future key generation process. In particular, the second entity 8 may comprise a memory or database 10 in which the second entity 8 saves data regarding previous actions the second entity 8 has performed. For example, the second data 9 could be any information relating to a prior authentication performed by the second entity 8. The key may be generated using any technique. For example, the character string of the first and second data could be hashed, the OTP may be generated from the hash value. Any suitable cryptographic hash function may be used, for example SHA-1, SHA-2 or SHA-3.

It is noted that for the first request received by the second entity 8, there may not be a prior action from which second data can be taken. Accordingly, the second entity 8 may perform a dummy action or save or receive an initial dummy data entry in order to generate a key for the first request according to the methods disclosed herein.

The representation 11 of the key may be the string value of the key itself, or the generated key may be input into a hash function and the hash value of the key may be the representation 11. If the hash value of the key is saved, either locally or remotely, advantageously this means that neither the second entity 8 nor the thrid entity 4 has knowledge of the key before it is keyed into the system 3 by the first entity 1 (i.e. only the first entity 1 has prior knowledge of the key).

Because the key is generated partly based on second data 9 which is unrelated to any data in the request and which is only available to the second entity 8, the key cannot be reconstructed by a third party who only knows the first data from the request 6.

Once the key is generated, it is sent as an message 13 (for example an electronic message. text, email, instant message or other) to the first entity 1. In the illustrated example, the key is sent via email from an outgoing mail server 12 of the second entity 8 to an incoming mail server of the first entity 1.

The second data 9 may be any information which is generated from a prior action or event of the second entity 8. In some embodiments, the second data 9 is derived from non-repeatable information about the previous action. For example, the second data 9 may be derived from the time in UTC that a previous request was received at the server 7. Advantageously, the use of non-repeatable information about the prior action prevents a third party from fixing the second data using repeatable information in prior requests.

To further prevent attempts to derive the method of generation of the key (for example by a third party sending multiple requests and receiving multiple keys), the second data may be a hash value of information about the previous action. Alternatively, or additionally, the first data may be a hash value of information contained in the request.

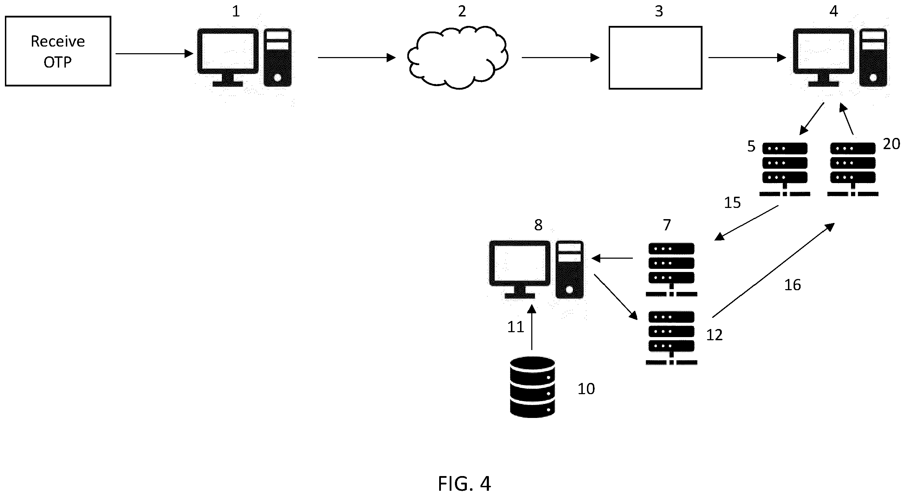

Once the key is sent to the first entity 1, the first entity 1 may submit a key to the third entity 4 (e.g. in a field in system 3 for entering the key, or by an electronic message to the third entity 4). The third entity 4 then initiates a process for verifying the key as shown in Fig. 4. Firstly, the third entity 4 sends a request to the second entity 8 to verify whether the key corresponds to the generated key. This request may be sent in the form of an electronic message 15 sent by outgoing server 5 to incoming server 7. The request may contain the key entered itself or may be the hash value of the key entered. The request also contains the unique reference to the key request.

The second entity 8 then compares the information in the request to the representation of the key to determine whether the key inputted by the first entity 1 was the generated key. For example, the hash value contained in the request 15 is compared to the representation 11, or if the key is sent directly, then the key is hashed and compared to the representation 11.

Once it is determined whether the key entered by the first entity 1 was the generated key, the second entity 8 indicates this to the third entity 4, for example by an electronic message 16 sent from the outgoing server 12 to the incoming server 20, in which it is indicated whether the key entered was correct or not.

Alternatively, the third entity 4 may be provided with the representation of the generated key by the second entity 8 once the generated key has been sent to the first entity 1, and the third entity 4 may itself compare the key entered by the first entity 1 to the representation of the generated key to determine whether the first entity 1 has submitted the correct key. Accordingly the second entity 8 may not be involved in verifying whether the entered key is correct, but instead the third entity 4 may perform this verification process itself.

In one specific example, the key is generated as follows: receive a request to generate the key; hash the address (and/or the entity ID) of the first entity 1, resulting in a first hash value being the first data; obtain data (from another entity or from the local memory of the second entity 8) regarding a previous action and hash the data, resulting in a second hash value being the second data; hash the combination of hash values resulting in a third hash value; take a predetermined set of characters from the third hash values as the key (for example the last eight numerical digits of the third hash value); send the key; hash the key, resulting in a fourth hash value; and save the fourth hash value in the memory along with the unique reference of the request (or send the fourth hash value and unique reference to another entity for storing).

The electronic message 13 may additionally be certified by any suitable method. Examples of suitable certification methods are disclosed in European patent publication numbers EP3188435 A1, EP2723023 A1 and EP2632096 A1.

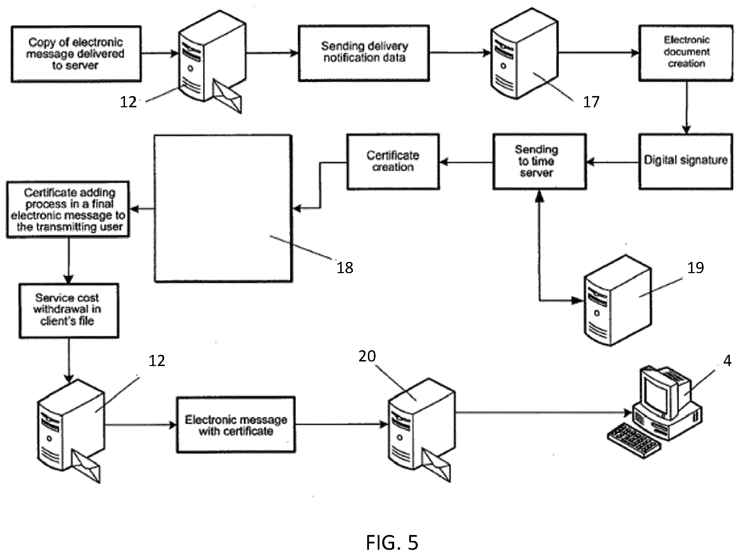

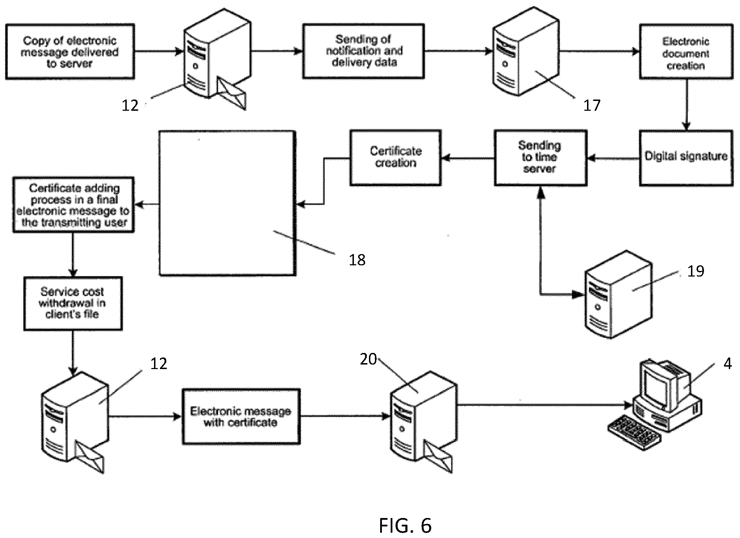

Figs. 5 and 6 show flow diagrams of a method of certifying an electronic message according to one or more embodiments.

If the electronic message 13 is correctly delivered to the first entity 1 (e.g. was able to be delivered to the server 14) then the certification process in Fig. 3 is performed.

Once the copy of the electronic message 13 has been delivered to the server 14 the outgoing server 12 receives the notification data relative to the delivery to the transmission of the electronic message 13 copy and sends it to a processing unit 17 of the second entity 8 which manages the certification process.

Once the delivery directions, steps, incidences or any information that may be useful for the certification process have been received, the processing unit 17 creates, in the preferred embodiment shown in Fig. 2, an electronic document in, for example, a PDF format which includes the third entity's 4 data of the key request, date of issuance of the key, contents, attached files if any, and finally the date and time of delivery of the key.

Once the electronic document has been created, it is digitally signed through a digital signature algorithm for the creation of a certificate 18.

In addition, a digital sum of all the previous contents may be done, i.e., of the electronic document and the digital signature, and it is sent to a trusted timestamping 19 in order to obtain an electronic document with two electronic signatures from two companies in order to provide the certificate 18 itself with greater legal reinforcement.

Once the final file or certificate 18 is available, in embodiments where the system 3 is of a third entity 4, it may be sent to the third entity 4, either automatically or after a certificate request is sent to the second entity 8 from the third entity 4, first withdrawing the cost from their credit account, and is then delivered to the outgoing mail server 12. This server 12 sends an electronic message to the third entity 4 including the certificate 18.

Fig. 6 shows a preferred embodiment of a flow chart in which the copy of the electronic message 13 may not be delivered to the first entity 1. If the electronic message 13 cannot be delivered, either because the entity 1 (e.g. address) does not exist, or because the domain is inoperative, it is attempted again during a period of for example 24 hours.

If it is finally able to be delivered, it continues the process according to what was previously explained, but if it cannot be delivered, the outgoing mail server 12 receives the data from the transactions made, which are sent to the processing unit 17.

Once the delivery indications, the steps, the incidences and any information that might be useful to the certification process are received, the processing unit 17 creates, in the preferred embodiment shown in Fig. 6, an electronic document in, for example, a PDF format including the second entity's 8 data of the key request or the third entity's 4 data of the key request, the date of transmission, the contents, the attached files if any and finally the time and date of the delivery attempt of the copy of the electronic message 13.

Once this electronic document has been created, it is signed digitally through a digital signature algorithm, creating a certificate 18.

In addition, a digital sum of all the previous contents may be done, i.e., of the electronic document and the digital signature, and it is sent to a trusted timestamping 19 in order to obtain an electronic document with two electronic signatures from two entities in order to provide the certificate 18 itself with greater legal reinforcement.

Once the final file or certificate 18 is available, in embodiments where the system 3 is of a third entity 4, it may be sent to the third entity 4 first withdrawing the cost from their credit account and is then delivered to the outgoing mail server 12. This server 12 sends an electronic mail to the third entity 4 including the certificate 18.

Information about the certification may additionally be stored in the memory 10 and may form the second data for the methods disclosed herein.

In the methods disclosed herein, the previous action may be within a predetermined time or a number of actions before the key is generated. For instance, the memory 10 may comprise data entries having a timestamp associated with them and the timestamp may be within a predetermined time before the time the request was received at the server 7. In some examples, the previous action may be a predetermined number of actions prior to the generation of the key. For example, the previous action may be the immediately prior action or the second (or third fourth etc.) most recent action.

The above methods may be used, for example, in a financial transaction. For example, a user (e.g. first entity) of a banking service may wish to perform a financial transaction using the banking system (e.g. via a banking app or other banking service). The bank may wish to authenticate the user before allowing the financial transaction to occur. The bank may therefore send a key or OTP to the user using one of the methods disclosed herein (the bank may generate the key itself, as in the case of Fig. 1, or may request another entity to do so, as in the case of Fig. 3). The bank may then receive a key entered by the user (e.g. on an app or via an electronic message). The bank may then perform a comparison of this key to the generated key using one of the methods disclosed herein (the comparison may be performed by the bank itself by comparing the representation of the generated key to the key entered by the user, or it may request another entity to perform the comparison). If it is found that the user entered the correct key, then the bank allows the financial transaction to occur.

In another example, the above methods may be used in a digital signing platform. In the example, a user (e.g. first entity) wishes to digitally sign a document. The user accesses a system which hosts the document, and requests a key to authenticate the user. The digital signing platform may therefore send a key or OTP to the user using one of the methods disclosed herein (the platform may generate the key itself, as in the case of Fig. 1, or may request another entity to do so, as in the case of Fig. 3). The platform may then receive a key entered by the user (e.g. on an app or via an electronic message). The platform may then perform a comparison of this key to the generated key using one of the methods disclosed herein (the comparison may be performed by the platform itself by comparing the representation of the generated key to the key entered by the user, or it may request another entity to perform the comparison). If it is found that the user entered the correct key, then the document is digitally signed. In particular, the digital signature may be the verified key entered by the user.

## Claims

1. A method of generating a key for authenticating a first entity (1) accessing a system (3), comprising:
generating a first key at a second entity (8), wherein the first key is generated from:
• a first data derived from information about the first entity (1) accessing the system (3); and
• a second data derived from a previous action;
the method further comprising:
sending the first key to the first entity (1).

2. The method of claim 1, wherein the second entity (8) is configured to:
receive a value derived from a second key inputted to the system (3) by the first entity (1); and
perform a comparison between the value and the first key.

3. The method of claim 1 or 2, further comprising inputting the first key into a hash function.

4. The method of any preceding claim, further comprising saving a representation of the first key in a memory (10) of the second entity (8).

5. The method of any preceding claim, wherein the second data is derived from non-repeatable information about the previous action performed by the second entity (8).

6. The method of any preceding claim, wherein the second data is a hash value of information about the previous action.

7. The method of any preceding claim, wherein the first data is a hash value of information about the first entity (1) accessing the system (3).

8. The method of any preceding claim, wherein the first key is sent to the first entity (1) by an electronic message; optionally wherein the electronic message is certified; further optionally wherein the second entity (8) is configured to generate evidence of delivery of the electronic message.

9. The method of any preceding claim, wherein the second data is derived from a certification entry stored by the second entity (8).

10. The method of any preceding claim, wherein the previous action is within a predetermined time or a number of actions before the first key is generated.

11. The method of any preceding claim, wherein the system (3) is of a third entity (4), and a request to send a first key to the first entity (1) is received by the second entity (8) from the third entity (4).

12. The method of claim 11, wherein the second entity (8) is further configured to indicate the validity of the second key to the third entity (4) based on a comparison to determine whether the second key entered by the first entity (1) corresponds to the first key.

13. A method of authenticating a first entity (1) accessing a system (3), comprising:
generating a first key according to any of the preceding claims;
receiving a second key inputted to a system (3) by the first entity (1); and
performing a comparison between the value and the first key;
optionally wherein the system (3) is of a third entity (4), and the method further comprises indicating to the third entity (4), based on the comparison, whether the second key inputted by the first entity (1) corresponds to the first key.

14. The method of claim 13, wherein the value is the second key inputted to the system (3) by the first entity (1) or wherein the value is a hash value of the second key inputted by the first entity (1); optionally wherein the hash value of the first key is saved in the memory (10) of the second entity (8), and the hash value of the second key inputted by the first entity (1) is compared to the hash value of the first key saved in the memory (10).

15. A data processing system adapted to perform the steps of the method of any preceding claims.
